# EUROPÄISCHE PATENTSCHRIFT

(11) **EP 0 649 591 B1**
(45) Veröffentlichungstag und Bekanntmachung des Hinweises auf die Patenterteilung: **28.01.1998**
(21) Anmeldenummer: 94114010.5
(22) Anmeldetag: 07.09.1994
(51) Int. Cl.: A01F 29/20

(54) **Sicherheitsvorrichtung eines Gegenschneideneinstellers**
Security device for a shear bar adjusting mechanism
Dispositif de sécurité d'un mécanisme de réglage du contre-couteau

(30) Priorität: 20.10.1993 DE 4335786
(43) Veröffentlichungstag der Anmeldung: 26.04.1995
(73) Patentinhaber: CLAAS Kommanditgesellschaft auf Aktien, 33428 Harsewinkel (DE)
(72) Erfinder: Behnke, Willi, D-33803 Steinhagen (DE); Huster, Jochen, D-33428 Harsewinkel (DE); Hieronymus, Peter, D-33758 Schloss Holte (DE)

(56) Entgegenhaltungen:
- EP-A- 0 217 461
- EP-A- 0 291 216
- EP-A- 0 402 634
- DE-A- 4 134 957
- FR-A- 2 537 832
- FR-A- 2 559 992
- US-A- 5 083 976

## Beschreibung

Die Erfindung betrifft eine Gegenschneiden-Verstellvorrichtung für eine Gegenschneidenschiene, insbesondere eines Feldhäckslers, mit einer Schleifvorrichtung, und mindestens zwei Klopfsensoren, deren tiefpaßgefilterten Klopfsensorsignale, die jeweils bei einem Kontakteintritt zwischen der Gegenschneidenschiene und an einer drehenden Messertrommel angeordneten Schneidmessern entstehen, einer Steuervorrichtung mit einem Mikroprozessor zugeführt werden, der zwei Stellmotoren von Verstellmechaniken, die an den Enden der Gegenschneidenschien zur Messertrommel angekoppelt sind, abhängig von den mit Schwellwertschaltungen bewerteten Klopfsensorsignalen so beaufschlagt, daß jeweils ein vorgegebener Schneidenspalt entsteht.

Eine derartige Vorrichtung ist aus der EP 0 291 216 A1 bekannt. Bei dieser sind mehrere Geräuschsensoren auf der motorisch verstellbaren Gegenschneidenschiene angeordnet. Aus den aufgenommenen Geräuschsignalen werden jeweils in einer Gleichrichter- und Filterschaltung Hüllkurvensignale erzeugt, die bezüglich mehrerer verschieden hoher schwellen und Zeitdauern analysiert werden, so saß ein leichtes Klopfen des Messers an die Schneide oder ein starkes Klopfen zu unterscheiden ist, wobei im letzteren Fall der zuletzt betätigte Stellmotor spalterweiternd angesteuert wird. Eine Fehlfunktion des Mikroprozessors und eine Fehlfunktion der Ansteuerung der Stellmotoren ist hierbei nicht abgesichert.

Es ist Aufgabe der Erfindung, die eingangs genannte Gegenschneiden-Verstellvorrichtung in seiner Funktonssicherheit zu erhöhen.

Die Lösung der Aufgabe besteht darin, daß die tiefpaßgefilterten Klopfsensorsignale unmittelbar je einer der Schwellwertschaltungen zugeführt werden, deren Schwellwert so gewählt ist, daß jeweils infolge eines Kontakteintrittes intensitätsgemäß mehrere Ausgangsimpulssignale auftreten, die von den beiden Schwellwertschaltungen kommend einem Zähler am Zähleingang zugeführt werden sowie einem ersten retriggerbaren Zeitglied, dessen Zeitkonstante der Dauer einer Folge weniger Ausgangsimpulssignale entspricht, am Triggereingang zugeführt werden, und daß das negierte Zeitsignal vom ersten Zeitglied, das jeweils bei einer entsprechend langen Impulslücke auftritt, jeweils den Zähler zurücksetzt, von dem ein Zählersignal beim Erreichen eines vorgegebenen zählerstandes eine zweite retriggerbare Zeitgeberschaltung oder eine Halteschaltung setzt, deren Ausgangssignal einen Sicherheitsschalter ansteuert, der die Spannungsversorgungsleitung von den Stellmotoren trennt und/oder drehrichtungsumkehrend umpolt.

Vorteilhafte Ausgestaltungen sind in den Unteransprüchen angegeben.

Die erfindungemäße Gegenschneiden-Verstellvorrichtung kann in jeder beliebigen bekannten Einstellmechanik verwendet werden. In einer solchen Ausführung ist die Gegenschneidenschiene auf einem Träger befestigt, welcher auf jeder Seite über einen Hebelarm und einen Motor mit aufgesetztem Getriebe in seiner Lage verändert werden kann. Durch Rechts- oder Linksdrehen der Motoren fährt der Träger mit der Gegenschneidenschiene zur Messertrommel vor bzw. zurück. Ein Bremsbackenlager in jedem Hebelarm verhindert eine unkontrollierte Bewegung des Trägers während des Häckselbetriebes. Der Klopfsensor meldet dem Mikroprozessor während des Einstellens jeden Kontakt der Gegenschneidenschiene mit der rotierenden Messertrommel, worauf der Mikroprozessor programmgesteuert reagiert und die Motoren entsprechend so steuert, daß die Gegenschneidenschiene in eine vorgewählte günstige Position zur Messertrommel kommt.

Zum Schliefen wird die in der die Messertrommel teilweise umschließenden Sicherheitsverkleidung eingelassene Schleifklappe geöffnet, wonach die Schleifvorrichtung den Schneidmessern zugeführt wird. Die Gegenschneidenschiene wird während des Schleifens von der Messertrommel in eine Schleifposition weggeführt, und die Schneidmesser werden mit laufender Messertrommel geschliffen. Nach Beendigung des Schleifvorganges wird die Schleifklappe wieder geschlossen, und die Gegenschneidenschiene wird wieder auf einen optimal engen Spalt zu den Messern zurückgestellt.

Durch den Einsatz von Klopfsensoren in Verbindung mit dem neuartigen Gegenschneideneinstellprogramm wird eine höchstmöglich genaue und schnelle Einstellung der Gegenschneidenschiene erreicht, wobei zusätzlich die Sicherheit der Arbeitsweise der funktionswesentlichen Bauteile ständig überwacht wird.

Die unmittelbare, also ohne Hüllsignalbildung, vorgenommene Erzeugung von binärwertigen Signalen aus den Geräuschsensorsignalen und deren digitale Weitererarbeitung erbringt eine wesentlich sicherere Unterscheidung der relevanten und der kritischen, einen zu engen Messerspalt anzeigenden, Geräuschsignale von unkritischen. Bei einem Kontakt zwischen einem Messer und der Gegenschneide erfolgt jeweils eine Stoßsignalausbreitung über die Schiene und somit eine Schwingungsanregung, die jedoch nach wenigen Schwingungen abklingt. Wegen der unterschiedlichen Ausbreitungswege des Stoßes über die Schiene treffen an den Sensoren Frequenzgemische auf, die je nach der Phasenlage und Amplitude der, einzelnen Signalanteile zeitweilig zu einer Auslöschung oder zu verstärkender Überlagerung derselben führen. Somit können auch Lücken entstehen, die mit den vorbekannten Hüllsignaldetektoren analysiert, fehlerhaft nur ein leichtes Klopfen vortäuschen würden. Anders findet bei der neuartigen Vorrichtung eine Überbrückung solche kurzer Schwebungslücken durch das erste Zeitglied statt, so daß auch kurzzeitig durch Überlagerungen unterbrochene Schwingungszüge als Ganzes geschlossen ausgewertet werden. Dadurch werden auch unter Umständen schwache aber länger anhaltende Schleifgeräusche des gerade kontaktierenden Messers an der Gegenschneide als kritisch bewertet, da eine große Zahl von Impulsen in den Zähler aufgezählt wird, die letztlich zu einer Überschreitung des als Zählschwelle vorgegebenen Zählerstandes führt und so ein weiteres Zufahren des Spaltes verhindert.

Das Ausgangssignal des Zählers wirkt unter Umgehung des Mikroprozessors unmittelbar auf die Ansteuerung der Stellmotore ein; die Sicherheitsschaltung ist somit vom Mikroprozessor unabhängig. Außerdem überwacht daneben der Mikroprozessor die Geräuschsensorsignale einzeln oder bereits zusammengefaßt in analoger Weise wie der Zähler, so daß unabhängig ein Stillsetzen oder Reversieren der Stellantriebe vom Mikroprozessor vorgenommen wird. Darüberhinaus ist die Fehleranzeige des Zählers oder vorzugsweise der nachgeordneten zweiten Zeitgeber- oder Halteschaltung von Mikroprozessor überwacht, so daß ständig eine Überprüfung der Sicherheitsschaltung erfolgt, wobei ein Fehlen der Fehleranzeige, also der vorgesehenen Sicherheitsredundanz vom Mikroprozessor dem Bediener gemeldet wird.

Auch das Vorhandensein der beiden Geräuschsensoren, die der Sicherheit bei Ausfall einer der Detektorschaltungen dienen, wird ständig überprüft, indem entweder die beiden Detektorsignale getrennt dem Mikroprozessor zugeführt und auf etwa gleiche Impulszahlen in einem vorgegeben größeren Zeitabschnitt überprüft werden und/oder indem die Impulssignale der Detektoren über eine UND-Verknüpfung dem ersten Zeitglied Zugeführt werden, so daß nur dann eine Rücksetzung des Zählers erfolgt, wenn eine längere Impulslücke auftritt, nachdem von beiden Detektoren Signale gleichzeitig geliefert wurden. Ist also ein Detektor defekt, so führen die Impulse des anderen alsbald zum Fehlersignal vom dadurch gefüllten und nicht rückgesetzten Zähler.

Die Verknüpfung der Impulssignale der beiden Detektoren kann in einfachster Weise durch eine verdrahtete ODER-Schaltung an deren Ausgängen erfolgen, wobei jedoch eine teilweise Auslöschung der Signale durch deren Überlappungen erfolgt. Exakter ist eine Verknüpfung der Impulse in einer Antivalenzschaltung, die jeweils bei den Überlappungen eine Impulslücke liefert und somit die nicht überlappenden Impulsteile in die einzelnen Zählimpulse zeitlich auflöst.

Eine weitere Erhöhung der Sicherheit der Messereinstellung ist dadurch gegeben, daß eine laufende Überwachung der Motordrehungen vorgenommen wird und abhängig davon die Spalteinstellung erfolgt. Hierbei wird insbesondere berücksichtigt, daß durch die Reibungsbremsung in der Einstellvorrichtung, die eine Verstellung der Messerjustage verhindern soll, jeweils am Ende eines Einstellvorganges, der auf einem Auftreten eines leichten Klopfgeräusches oder auf dessen Verschwinden beruht, eine elastische Verspannung der Einstellmittel durch die Reibungskraft vorliegt. Diese kann durch eine Erschütterung beim Häckseln, z.B. durch ein hartes Objekt im Messerspalt verursacht, sprunghaft gelöst werden, was zu einer Verstellung der Gegenschneide in die drehenden Messer hinein oder unerwünscht weit von diesen wegführt. Dies verhindert das neuartige Einstellverfahren, bei dem der durch die Verspannung jeweils verursachte Totgang der Antriebsvorrichtungen anhand der Umdrehungszählungen während der jeweils noch nicht einsetzenden Geräuschänderung nach einer Drehrichtungsumkehr der Stellmotoren ermittelt wird und zum Abschluß eines Einstellvorganges die Verspannung gelöst wird, indem ein reversierter Motorbetrieb um die halbe jeweils ermittelte Totgangumdrehungszahl erfolgt.

Außerdem erfolgt vorteilhaft eine Kontrolle der Größe des Totganges, wodurch ein unzulässiges Festsitzen der Reibungsbremse ebenso wie eine unzulässige Überfettung derselben erkannt werden. Insbesonders letztere könnte zu einem schädlichen Verstellen des Schneidspaltes im Betrieb führen.

Eine zusätzliche Kontrolle des Bremsenzustandes erfolgt vorteilhaft insbesondere dann, wenn eine Totgangfehlermeldung vorliegt. Dabei werden die Stellmotoren mit veränderter Kraft angetrieben, indem das übliche Pulspausenverhältnis der Ansteuerspannungsversorgung nacheinander nach unten oder oben variiert wird, bis der Grenzwert ermittelt ist, bei dem die Bremskraft noch überwunden wird. Dieser Wert wird dann vom Mikroprozessor dem Bediener gemeldet oder für einen späteren Wartungsvorgang bereitgestellt.

Im übrigen ist es vorteilhaft vorgesehen, die beiden Stellmotoren jeweils alternierend mit einem Spannungsimpuls und somit mit einem Pulspausenverhältnis von etwa 0,5 zu betreiben, wodurch die Strombelastung der Versorgung nur jeweils für einen der Motore auftritt.

Die Erfindung wird nachfolgend anhand eines bevorzugten Ausführungsbeispieles anhand der beiden Figuren erläutert.
- Fig. 1: zeigt die Gegenschneidenverstellvorrichtung (1) mit geöffneter Schleifklappe aus einer Sicht von der Seite;
- Fig. 2: zeigt die Gegenschneidenverstellvorrichtung ausschnittsweise aus einer Sicht von vorn (Stand der Technik).

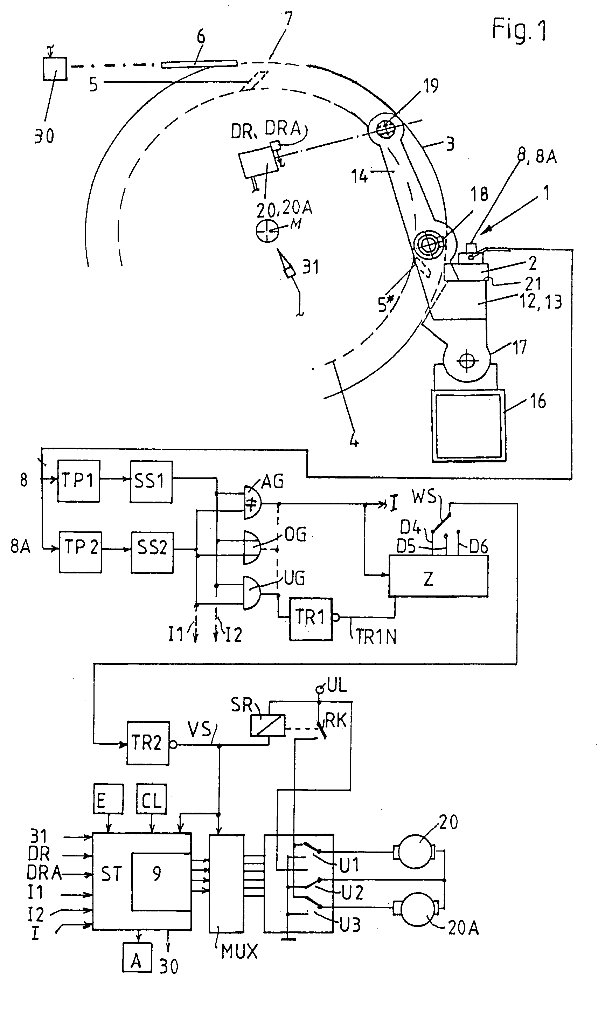

Figur 1 zeigt schematisch in Seitenansicht die an der Messertrommel (4) mit geöffneter Schleifklappe (6) angeordnete Gegenschneidenverstellvorrichtung (1). Die sich um eine Mittelachse (M) drehende Messertrommel (4) ist zum größte Teil von einer Sicherheitsverkleidung (3) umhüllt. Beispielsweise sind zwei der Schneidmesser (5, 5*) eingezeichnet, die umfangsmäßig verteilt auf der Messertrommel (4) befestigt sind. Auf einem gestellfesten Querträger (16) ist, auf einem Lagergelenk (17) gelagert, der Träger (12) angebracht, welcher sich über die gesamte Breite der Messertrommel (4) und darüberhinaus erstreckt. Auf der Trägeroberfläche (21) ist die Gegenschneidenschiene (2) fest verschraubt, wobei der Träger (12) seitlich etwas übersteht. Auf dem Gegenschneidenschienenträger (12) ist in beiden Endbereichen je ein Klopfsensor (8, 8A), von denen in dieser Zeichnung nur ein Klopfsensor sichtbar ist, angebracht. Es sind die an der Unsichtbaren Seite angeordneten gleichartigen Bauteile mit einer gleichen Referenznummer und einem angehängten A bezeichnet. Jeder Klopfsensor (8, 8A) ist über ein Kabel mit einer Steuervorrichtung (ST) verbunden, die einen Mikroprozessor (9) enthält. Mit den Trägerenden (13) ist je ein Hebelarm (14) fest verbunden. Die Hebelarme (14) sind je mit einer Reibungsbremse (18) ausgestattet, welche ein unabsichtliches Verstellen des Hebelarmes (14) verhindert. Über je ein Führungsgelenk (19) sind die Hebelarme (14) mit je einem Einstellmotor (20, 20A) verbunden. Die Schleifklappe (6) ist geöffnet, um durch die Öffnung (7) die Zufuhr der nicht dargestellten Schleifvorrichtung zu ermöglichen. Über das Messertrommel-Sensorkabel empfängt der Mikroprozessor (9) Signale eines an der Messertrommel (4) angebrachten Drehsignalsensors (31) und überprüft anhand dieser Signale die Drehgeschwindigkeit der Messertrommel (4). Der Mikroprozessor (9) ist dazu mit einer Uhrtaktgeberschaltung (CL) verbunden.

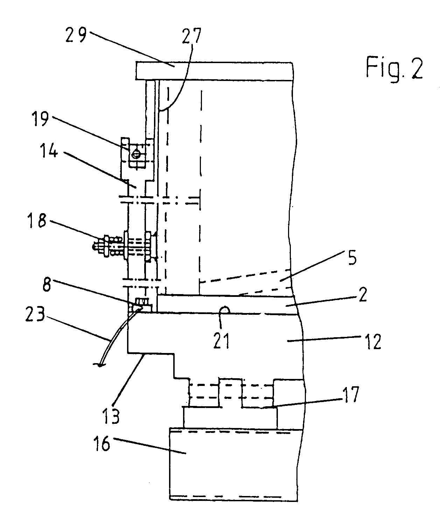

Figur 2 zeigt einen seitlichen Abschnitt einer bekannten Gegenschneiden-Verstellvorrichtung aus einer Sicht von vorne. Auf einem Querträger (16) ist der Träger (12) durch ein Gelenk (17) schwenkbar gelagert. Auf der Trägeroberfläche (21) ist die Gegenschneidenschiene (2) fest montiert. Auf dem seitlichen Trägerende (13) ist der Klopfsensor (8) angebracht, welcher durch ein Kabel (23) mit der Steuervorrichtung (ST) verbunden ist. Der Träger (12) ist seitlich mit einem Hebelarm (14), welcher mit einer an der Seitenwand (27) festgelegten Reibungsbremse (18) ausgestattet ist, fest verbunden. Der Hebelarm (14) ist durch ein Führungsgelenk (19) mit einem Einstellmotor verbunden. Eines der wendelförmig auf der Messerwalzenoberfläche angeordneten Schneidmesser (5) ist beispielhaft gestrichelt eingezeichnet.

In Figur 1 ist weiterhin das Schaltschema der Verknüpfungen dargestellt, durch die die Sicherheit der Schneidspalteinstellung gewährleistet ist. Die Signale der Geräuschsensoren (8, 8A) sind jeweils über eine Tiefpaßschaltung (TP1, TP2) sowie eine nachgeschaltete Schwellwertschaltung (SS1, SS2) geführt, so daß an deren Ausgängen die Impulssignale (I1, I2) entstehen. In einer einfachen Ausführung sind die beiden Impulssignale (I1, I2) in einem ODER-Gatter (OG), das ein verdrahtetes Gatter sein kann, verknüpft und, wie gestrichelt dargestellt, als das gemeinsame Impulssignal (I) dem Zähler (Z) an dessen Zähleingang und dem ersten Zeitglied (TR1) - das retriggerbar ist - sowie der Steuervorrichtung (ST) zugeführt. Alternativ werden die beiden Impulssignale (I1, I2) in einem Antivalenzgatter (AG) verknüpft und so dem Zähler (Z) sowie der Steuervorrichtung (ST) zugeführt. Hierdurch werden die Auslöschungen von Impulsen bei zeitlicher Überlappung derselben vermieden. Weiterhin ist vorteilhaft alternativ statt des ODER-Gatters ein UND-Gatter (UG) vorgesehen, dessen Ausgangssignal jeweils dann, wenn beide Impulssignale (I1, I2) gleichzeitig vorhanden sind, das erste Zeitglied (TR1) ansteuert.

Dieses erste Zeitglied (TR1) steuert mit seinem negierten Ausgang (TR1N) den Rücksetzeingang des Zählers (Z) an. Auf diese Weise wird jeweils dann, wenn nach einer Gruppe von Impulsen eine Impulslücke, die länger als die Zeitkonstante des Zeitgliedes ist, auftritt, der Zähler (Z) wieder zurückgesetzt. Diese Zeitkonstante entspricht der Länge mehrere Schwingungen der Geräuschsignale, d.h. einer üblichen Schwebungslänge bei der Signalüberlagerung von verschiedenen Geräuschanteilen. Am Ausgang dieses Zählers (Z) ist ein Wahlschalter (WS) angeordnet, der jeweils mit einem der Zählausgänge (D4, D5, D6), für z.B. 16, 32 oder 64 Impulse, wahlweise verbunden ist, angeordnet. Von diesem führt eine Ansteuerleitung zu der zweiten Zeitgeberschaltung (TR2), die jeweils ein längeres Ausgangssignal von z.B. 3 Sekunden Dauer ausgibt, welches dazu dient, die Stellmotoren (20), 20A) am weiteren Verengen des Schneidspaltes zu hindern und, je nach der computerseitigen Ansteuerung, diesen wieder zu vergrößern. Statt des zweiten Zeitgliedes (TR2) kann auch eine selbsthaltende Schaltung, z.B. ein Flip-Flop oder eine Zählerrückkopplung, vorgesehen werden, welche nach Behebung des Fehlers, d.h. insbesondere des zu engen Schneidspaltes, zurückgesetzt wird.

Die Steuerschaltung (ST) ist eingangsseitig von einem Impulsgeber (31), den Drehmeldern (DR, DRA) der Stellmotore (20, 21) und den Impulssignalen (I1, I2) und/oder dem daraus durch Verknüpfung erzeugten gemeinsamen Impulssignal (I) sowie dem Ausgangssignal (VS) der zweiten Zeitgeberschaltung (TR2) beaufschlagt. Außerdem ist eingangsseitig eine Eingabetastatur (E) oder Eingabevorrichtung oder eine Nachrichtenleitung zu einem zentralen Prozessor angeschlossen sowie ein Zeitsignal einer Uhr (CL) vorgesehen. Ein Ausgang der Steuervorrichtung (ST) speist bei Störungen oder zur Ausgabe von Zustandssignalen eine Ausgabevorrichtung (A), die sich auch an einem Zentralrechner befinden kann, der über eine Nachrichtenleitung an die Steuervorrichtung (ST) angeschlossen sein kann. Weiterhin steuert die Steuervorrichtung (ST) Motore (30) für das Schleifen.

Die Ausgänge des Mikroprozessors (9) der Steuervorrichtung (ST), welche die Stellmotoren (20, 20A) ansteuern, sind über einen Multiplexer (MUX) geführt, dessen Ausgänge die elektronischen Schalter (U1, U2, U3) ansteuern, die der Einfachheit halber als Kontaktumschalter dargestellt sind. Diese Umschalter verbinden zum einen die Zuleitungen der Anker der Stellmotoren (20, 20A) mit der Versorgungsspannung (UL) sofern das Sicherheitsrelais (SR) den Arbeitskontakt (RK) schließt. Tritt ein Störfall, d.h. ein zu lang dauerndes Klopfgeräusch, auf, so wird das Sicherheitsrelais (SR) von dem Signal (VS) des negierten Ausganges der zweiten Zeitgeberschaltung (TR2) abgeschaltet. Auf diese Weise können die Motoren (20, 20A) nicht weiter spaltverengend betrieben werden. Es bleibt jedoch die Möglichkeit, daß, durch den Mikroprozessor (9) und den Multiplexer angesteuert, der elektronische Umschalter (U2) die beiden Motoren (20, 20A) spalterweiternd mit Spannung versorgt, da dieser mit der Spannungsversorgung (UL) fest verbunden ist. Diese Umsteuerung wird unmittelbar durch das Signal (VS) der zweiten Zeitgeberschaltung (TR2) im Multiplexer (MUX) bewirkt, dessen Umsteuerungseingang mit dem Signal (VS) beaufschlagt ist.

Es ist vorteilhaft vorgesehen, daß die motorisch einzustellende Spaltweite vom Bediener zum jeweiligen Schnittgut passend vorgebbar ist, wozu beispielsweise ein entsprechend skaliertes Eingabepotentiometer dient. Dieser Spaltweite ensprechend wird vom Mikroporzessor (9) eine Umdrehungszahl bestimmt, um die nach der Überwindung des Totganges der Messerträger zurückgefahren wird, bevor die Rückdrehung der Motoren (20, 20A) um die halbe Totgangumdrehungszahl, also die Entspannung, erfolgt.

Weiterhin ist eine Schnelleinstellung programmäßig vorgesehen, bei der die große Einstellgenauigkeit bei der vorgesehenen Entspannung am Ende jeder Einstellung genutzt wird und berücksichtigt wird, daß der Schleifvorgang je nach der Zahl der Schleifsteindurchläufe einen ganz bestimmten Abtrag am Messer erzeugt, dem eine Nachstellumdrehungszahl der Gegenschneide enspricht, wenn wieder die gleiche Anfangs-Messerspaltweite wie zuvor erreicht werden soll. Demgemäß wird die Endstellung des Stellantriebes vorgegeben und dessen Erreichen durch ein fortlaufendes Mitzählen der Umdrehungen ermittelt, wonach dann noch die Entspannung durch das Entgegendrehen um den halben Totgang erfolgt. Wie groß der Abtrag bei jedem Schleifsteindurchgang ist und welcher Umdrehungszahl dieser entspricht, ermittelt der Mikroprozessor zum Schluß eines Einstellvorganges mit einem zwischenzeitlichen Messerkontakt, wie oben im einzelnen ausgeführt, wonach eine Differenzbildung der Endstellungsumdrehungszahl zur Anfangsstellung des Umdrehungszählers bei richtungsgetreuer Zählung erfolgt. Die so ermitelte Umdrehungszahl entspricht dem Nachstellweg bzw. Schleifweg und wird für die folgenden Schleif-Einstellvorgänge abgespeichert.

## Patentansprüche

1. Gegenschneidenverstellvorrichtung (1) für eine Gegenschneidenschiene (2), insbesondere eines Feldhäckslers, mit einer Schleifvorrichtung, und mindestens zwei Klopfsensoren (8, 8A), deren tiefenpaßgefilterte Klopfsensorsignale, die jeweils bei einem Kontakteintritt zwischen der Gegenschneidenschiene (2) und an einer drehenden Messertrommel (4) angeordneten Schneidmessern (5, 5*) entstehen, einer Steuervorrichtung (ST) mit einem Mikroprozessor (9) zugeführt werden, der zwei Stellmotoren (20, 20A) von Verstellmechaniken (14), die an den Enden der Gegenschneidenschiene (2) zur Messertrommel (4) angekoppelt sind, abhängig von den mit Schwellwerten bewerteten Klopfsensorsignalen so beaufschlagt, daß jeweils ein vorgegebener Schneidenspalt entsteht,
dadurch gekennzeichnet, daß die tiefpaßgefilterten Klopfsensorsignale unmittelbar je Schwellwertschaltung (SS1, SS2) zugeführt werden, deren Schwellwert so gewählt ist, daß jeweils infolge eines Kontakteintrittes intensitätsgemäß mehrere Ausgangsimpulssignale (I1, I2) auftreten, die von den beiden Schwellwertschaltungen (SS1, SS2) kommend einem Zähler (Z) am Zähleingang zugeführt werden sowie einem ersten retriggerbaren Zeitglied (TR1), dessen Zeitkonstante der Dauer einer Folge weniger Ausgangsimpulssignale (I1, I2) entspricht, am Triggereingang zugeführt werden, und daß das negierte Zeitsignal (TR1N) vom ersten Zeitglied (TR1), das bei einer entsprechend langen Impulslücke auftritt, jeweils den Zähler (Z) zurücksetzt, von dem ein Zählersignal (D4, D5, D6) beim Erreichen eines vorgegebenen Zählerstandes eine zweite retriggerbare Zeitgeberschaltung (TR2) oder eine Halteschaltung setzt, deren Ausgangssignal (VS) einen Sicherheitsschalter (SR) ansteuert, der die Spannungsversorgungsleitung (UL) von den Stellmotoren (20, 20A) trennt und/oder drehrichtungsumkehrend umpolt.

2. Gegenschneidenverstellvorrichtung nach Anspruch 1, dadurch gekennzeichnet, daß die Ausgangsimpulssignale (I1, I2) der Schwellwertschaltungen (SS1, SS2) in einer verdrahteten ODER-Schaltung (OG) oder in einer Antivalenzschaltung (AG) verknüpft dem Zähleingang des Zählers (Z) und ebenso verknüpft oder einzeln dem Mikroprozessor (9) eingangsseitig zugeführt sind.

3. Gegenschneidenverstellvorrichtung nach Anspruch 1 oder 2, dadurch gekennzeichnet, daß die Ausgangsimpulssignale (I1, I2) der Schwellwertschaltungen (SS1, SS2) in einer UND-Schaltung (UG) verknüpft dem ersten Zeitglied (TR1) zugeführt sind.

4. Gegenschneidenverstellvorrichtung nach einem der vorstehenden Ansprüche, dadurch gekennzeichnet, daß das Ausgangssignal (VS) der zweiten retriggerbaren Zeitgeberschaltung (TR2) auf einen Eingang des Mikroprozessors (9) geführt ist und von diesem störungsmeldend ausgewertet wird.

5. Gegenschneidenverstellvorrichtung nach einem der vorstehenden Ansprüche, dadurch gekennzeichnet, daß das Zählersignal durch einen Wahlschalter (WS) an einem der Zählstufenausgänge (D4, D5, D6) abgegriffen wird.

6. Gegenschneidenverstellvorrichtung nach Anspruch 1, dadurch gekennzeichnet, daß der Mikroprozessor (9) mit Richtungssignalen und Motorsteuerungssignalen über einen Multiplexer (MUX) und diesem nachgeschaltete elektronische Umschalter (U1, U2, U3) die beiden Zuleitungen der Anker der Stellmotoren (20, 20A) und deren Rückleitung ansteuert und daß das Ausgangssignal (VS) der zweiten Zeitgeberschaltung (TR2) den Multiplexer (MUX) umsteuernd ansteuert, so daß die Motordrehrichtung entsprechend umgekehrt ist, und daß der Sicherheitsschalter (SR) ein Relais ist, über dessen Kontakt (RK) die elektronischen Umschalter (U1, U3) der Motorzuleitungen mit der Spannungsversorgungsleitung (UL) verbunden werden, die die Stellmotoren (20, 20A) schneidspaltverengend speisen.

7. Gegenschneidenverstellvorrichtung nach Anspruch 6, dadurch gekennzeichnet, daß das Sicherheitsschalterrelais (SR) mit dem Ausgangssignal (VS) abfallend stromlosmachend angesteuert ist und der Relaiskontakt (RK) ein Arbeitskontakt ist.

8. Gegenschneidenverstellvorrichtung nach einem der vorstehenden Ansprüchen, dadurch gekennzeichnet, daß an den Stellmotoren (20, 20A) jeweils ein Drehmelder (DR, DRA) angeordnet ist, der Drehwinkelimpulssignale dem Mikroprozessor (9) zugeführt sind, und daß dann, wenn ein Schleifvorgang beendet ist und die Messertrommel (4) sich dreht und der Schneidspalt nachgestellt werden soll:
- beiden Stellmotoren (20, 20A) um eine derart vorgegebene Anzahl Umdrehungen den Schneidspalt vergrößernd angesteuert werden, daß die Gegenschneidenschiene (2) einen toten Gang der Reibungsbremse sicher überwunden hat
- dann die Stellmotoren (20, 20A) synchron oder quasi synchron den Schneidspalt verengend so lange angesteuert werden, bis entweder eine vorgegebene Sicherheitsumdrehungsanzahl erreicht ist oder die Ausgangsimpulssignale (I1, I2) als Impulsgruppe ohne längere Unterbrechung hintereinander aufgetreten sind,
- dann die Stellmotoren (20, 20A) bei laufender Umdrehungszählung wieder spalterweiternd angesteuert werden, bis nach dem Ende einer Impulsgruppe mehr als eine Messertrommelumdrehungszeit vergangen ist, worauf die gezählte Totgang-Umdrehungszahl zwischengespeichert wird,
- und für eine einer bedienungsseitig vorgegebenen einzustellenden Spaltweite entsprechende Anzahl Umdrehungen die Stellmotoren (20, 20A) weiter spalterweiternd angesteuert werden, so daß eine geforderte Gegenschneidenendstellung erreicht ist,
- und dann die Stellmotoren (20, 20A) wieder spaltverengend angesteuert und die Umdrehungen dabei gezählt werden, bis die Hälfte der zwischengespeicherten Totgang-Umdrehungszahl erreicht ist, womit der Einstellvorgang beendet ist, oder bis wieder eine Impulsgruppe auftritt, wonach die beiden letzten Verfahrenschrittfolgen wiederholt werden.

9. Gegenschneidenverstellvorrichtung nach Anspruch 8, dadurch gekennzeichnet, daß dann, wenn die Umdrehungszählung bei dem spalterweiternden Betrieb bis zu dessen Ende nach dem Aussbleiben der Impulsgruppen eine Umdrehungszahl ergibt, die kleiner und/oder größer als ein vorgegebener unterer oder oberer Grenzwert ist, eine entsprechende Fehlermeldung über den Reibungsbremsenzustand einer Überfettung oder eines Festsitzens, ausgibt.

10. Gegenschneidenverstellvorrichtung nach Anspruch 9, dadurch gekennzeichnet, daß die Stellmotoren (20, 20A) pulslängenmoduliert angesteuert werden und dann, wenn eine Fehlermeldung des Reibungsbremszustandes vorliegt, sie mit einem fortlaufend veränderten Pulspausenverhältnis angesteuert werden, wobei die Signale der Drehmelder (DR, DRA) auf ihr Aussbleiben oder Widerauftreten überwacht werden und dann die Ansteuerung beendet und das jeweils vorliegende Puls-Pausenverhältnis auf einer Ausgabevorrichtung (A) gemeldet und/oder abrufbereit gespeichert wird.

11. Gegenschneidenverstellvorrichtung nach einem der Ansprüche 9 oder 10, dadurch gekennzeichnet, daß die beiden Stellmotoren (20, 20A) bei einem normalen Betrieb mit einem Tastverhältnis von nahezu 0,5 abwechselnd gespeist werden.

12. Gegenschneidenverstellvorrichtung nach einem der vorstehenden Ansprüche, dadurch gekennzeichnet, daß der Mikroprozessor (9) mit den Impuslssignalen (I1, I2; I) programmgesteuert intern eine Zählung und ggf. Zählerlöschung, analog zu der hardwaremäßigen Zählung und Löschung am Zähler (Z), vornimmt und jeweils beim Auftreten des jeweils als Grenzwert vorgegeben Zählerstandes die Stellmotoren (20, 20A) abschaltend oder spalterweiternd ansteuert und überprüft, ob das Signal (VS) das Ansprechen der zweiten Zeitsteuerschaltung (TR2) angibt und, falls dies nicht so ist, eine Meldung der Fehlfunktion ausgibt.

13. Gegenschneidenverstellvorrichtung nach Anspruch 8, dadurch gekennzeichnet, daß die einzustellende Spaltweite über eine Potentiometereinstellung dem Mikroprozessor (9) vorgegeben wird.

14. Gegenschneidenverstellvorrichtung nach Anspruch 8, dadurch gekennzeichnet, daß die einzustellende Gegenschneidenendstellung nach einer Voreinstellung des Umdrehungszählers auf eine einem vorherigen Schleifsteinvorschub entsprechende Umdrehungszahl durch während des ganzen Einstellvorganges fortlaufendes richtungsabhängiges Mitzählen der Umdrehungen der Einstellmotoren (20, 20A) bei der Zählerendstellung Null erreicht ist, wonach die entspannende Rückdrehung der Motoren (20, 20A) um die zwischengespeicherte halbe Totgangumdrehungszahl erfolgt.

## Claims

1. A co-operating cutter member adjusting apparatus (1) for a co-operating cutter bar (2), in particular of a forage harvester, comprising a grinding device, and at least two knocking sensors (8, 8A) whose low pass-filtered knocking sensor signals which are produced whenever contact occurs between the co-operating cutter bar (2) and cutting blades (5, 5*) arranged on a rotating blade drum (4) are fed to a control arrangement (ST) having a microprocessor (9) which, in dependence on the knocking sensor signals evaluated with threshold values, so actuates two setting motors (20, 20A) of adjusting mechanisms (14) which are coupled to the ends of the co-operating cutter bar (2) in relation to the blade drum (4), that a respective predetermined cutting gap is produced, characterised in that the low pass-filtered knocking sensor signals are fed directly to a respective threshold value circuit (SS1, SS2) whose threshold value is so selected that a plurality of output pulse signals (I1, I2) occur as a result of a respective contact taking place, in respect of intensity, which output pulse signals, coming from the two threshold value circuits (SS1, SS2), are fed to a counter (Z) at the counting input and are fed to a first retriggerable timing member (TR1) whose time constant corresponds to the duration of a series of a few output pulse signals (I1, I2), at the trigger input, and that the negated time signal (TR1N) from the first timing member (TR1) which occurs at a pulse gap of corresponding length respectively resets the counter (Z) from which a counter signal (D4, D5, D6), upon the attainment of a predetermined counter condition, sets a second retriggerable timer circuit (TR2) or a hold circuit whose output signal (VS) actuates a safety switch (SR) which separates the voltage supply line (UL) from the setting motors (20, 20A) and/or reverses polarity so as to reverse the direction of rotation.

2. A co-operating cutter member adjusting apparatus according to claim 1 characterised in that the output pulse signals (I1, I2) of the threshold value circuits (SS1, SS2) are fed to the counting input of the counter (Z) interlinked in a wired OR-circuit (OG) or in an exclusive OR-circuit (AG) and are fed likewise interlinked or individually to the microprocessor (9) at the input side.

3. A co-operating cutter member adjusting apparatus according to claim 1 or claim 2 characterised in that the output pulse signals (I1, I2) of the threshold value circuits (SS1, SS2) are fed interlinked in an AND-circuit (UG) to the first timing member (TR1).

4. A co-operating cutter member adjusting apparatus according to one of the preceding claims characterised in that the output signal (VS) of the second retriggerable timer circuit (TR2) is taken to an input of the microprocessor (9) and is evaluated thereby to signal a fault.

5. A co-operating cutter member adjusting apparatus according to one of the preceding claims characterised in that the counter signal is tapped off by a selector switch (WS) at one of the counting stage outputs (D4, D5, D6).

6. A co-operating cutter member adjusting apparatus according to claim 1 characterised in that the microprocessor (9) actuates the two feed lines of the armatures of the setting motors (20 and 20A) and the return line thereof with directional signals and motor control signals by way of a multiplexer (MUX) and electronic change-over switches (U1, U2, U3) connected downstream of the multiplexer, and that the output signal (VS) of the second timer circuit (TR2) reversingly actuates the multiplexer (MUX) so that the direction of motor rotation is correspondingly reversed, and that the safety switch (SR) is a relay, by way of the contact (RK) of which the electronic change-over switches (U1, U3) of the motor feed lines are connected to the voltage supply line (UL) which feeds the setting motors (20, 20A) so as to reduce the cutting gap.

7. A co-operating cutter member adjusting apparatus according to claim 6 characterised in that the safety switch relay (SR) is actuated with the output signal (VS) to release same making it current-less and the relay contact (RK) is a working contact.

8. A co-operating cutter member adjusting apparatus according to one of the preceding claims characterised in that arranged at each of the setting motors (20, 20A) is a respective rotary signalling means (DR, DRA) whose rotary angle pulse signals are fed to the microprocessor (9) and that when a grinding operation is concluded and the blade drum (4) is rotating and the cutting gap is to be readjusted:
- both setting motors (20, 20A) are actuated to increase the cutting gap by a number of revolutions which is predetermined in such a way that the co-operating cutter bar (2) has certainly overcome a dead motion of the friction brake,
- then the setting motors (20, 20A) are actuated synchronously or virtually synchronously to reduce the cutting gap until either a predetermined number of safety revolutions is attained or the output pulse signals (I1, I2) have occurred in succession as a pulse group without a prolonged interruption,
- then the setting motors (20, 20A) are actuated to increase the width of the gap again, with continuing counting of the revolutions, until after the end of a pulse group more than a blade drum revolution time has elapsed, whereupon the counted number of dead motion revolutions is put into intermediate storage,
- and for a number of revolutions corresponding to a gap width to be set which is predetermined by the operator the setting motors (20, 20A) are further actuated so as to increase the width of the gap so that a required co-operating cutter member final position is reached,
- and then the setting motors (20, 20A) are actuated to reduce the gap again and the revolutions in that operation are counted until half the number of dead motion revolutions in intermediate storage is reached, whereby the adjusting operation is concluded, or until a pulse group occurs again, whereafter the last two method step sequences are repeated.

9. A co-operating cutter member adjusting apparatus according to claim 8 characterised in that when counting of the revolutions, in the gap-increasing mode of operation, up to the end thereof after the pulse groups fail to appear, gives a number of revolutions which is lower and/or higher than a predetermined lower or upper limit value, a corresponding fault signal is outputted relating to the condition of the friction brake in respect of overgreasing or jamming.

10. A co-operating cutter member adjusting apparatus according to claim 9 characterised in that the setting motors (20, 20A) are actuated in pulse length-modulated manner and when there is a fault signal in respect of the condition of the friction brake, they are actuated with a continuously varied pulse gap ratio, wherein the signals of the rotary signalling means (DR, DRA) are monitored in respect of their failure to appear or their restoration and actuation is terminated then and the respectively occurring pulse gap ratio is signalled on an output device (A) and/or stored ready to be called up.

11. A co-operating cutter member adjusting apparatus according to one of claims 9 and 10 characterised in that in normal operation the two setting motors (20, 20A) are fed alternately with a pulse duty factor of nearly 0.5.

12. A co-operating cutter member adjusting apparatus according to one of the preceding claims characterised in that the microprocessor (9) under program control with the pulse signals (I1, I2; I) internally implements counting and possibly counter erasure, similarly to hardware counting and erasing at the counter (Z), and whenever the respective counter condition which is predetermined as a limit value occurs actuates the setting motors (20, 20A) for switching them off or for increasing the gap and checks whether the signal (VS) specifies the response on the part of the second timing circuit (TR2) and if that is not the case outputs a malfunction signal.

13. A co-operating cutter member adjusting apparatus according to claim 8 characterised in that the gap width to be adjusted is preset for the microprocessor (9) by way of a potentiometer adjustment.

14. A co-operating cutter member adjusting apparatus according to claim 8 characterised in that the co-operating cutter member end position to be adjusted is reached after a preliminary setting of the revolution counter to a number of revolutions corresponding to a previous grinding stone feed movement by directionally dependent joint counting, which is continuous during the entire adjusting procedure, of the revolutions of the setting motors (20, 20A) at the counter end position zero, whereafter the slackening reverse rotary movement of the motors (20, 20A) by half the number of dead motion revolutions in intermediate storage.

## Revendications

1. Dispositif de réglage de contre-lame (1) pour une barre contre-lame (2), notamment d'une ensileuse mobile, comportant un dispositif d'affûtage et au moins deux détecteurs de cognement (8, 8A) dont les signaux filtrés au moyen d'un filtre passe-bas, qui sont générés lors d'une entrée en contact de la barre contre-lame (2) avec des couteaux (5, 5*) disposés sur un tambour porte-couteaux (4), sont transmis à un dispositif de commande (ST) comportant un microprocesseur (9) qui, en fonction des signaux des détecteurs de cognement exploités avec des valeurs seuils, commande deux moteurs de réglage (20, 20A) de mécanismes de réglage (14) couplés aux extrémités de la barre contre-lame (2) de manière à obtenir chaque fois un jeu de coupe prédéterminé,
caractérisé par le fait que les signaux des détecteurs de cognement filtrés à l'aide du filtre passe-bas sont transmis directement chacun à un circuit à seuil (SS1, SS2), dont la valeur de seuil est choisie telle que chaque fois, suite à une entrée en contact des couteaux avec la contre-lame, plusieurs impulsions de sortie (I1, I2) soient générées en fonction de l'intensité, lesquelles impulsions, à la sortie des deux circuits à seuil (SS1, SS2), sont appliquées à l'entrée de comptage d'un compteur (Z) et à un premier système temporisé (TR1) redéclenchable, dont la constante de temps correspond à la durée d'une série de quelques impulsions de sortie (I1, I2) et par le fait que le signal de temps nié (TR1N) du premier système temporisé (TR1) qui apparaît pour un espace entre impulsions correspondant ramène à zéro le compteur (Z), dont un signal de compteur (D4, D5, D6), lorsqu'une position de compteur déterminée est atteinte, active un deuxième circuit d'horloge (TR2) redéclenchable ou un circuit de maintien dont le signal de sortie (VS) commande un commutateur de sécurité (SR) qui coupe la ligne d'alimentation en tension (UL) des moteurs de réglage (20, 20A) et/ou inverse la polarité aux fins d'inverser le sens de rotation.

2. Dispositif de réglage de contre-lame selon la revendication 1, caractérisé par le fait que les impulsions de sortie (I1, I2) des circuits à seuil (SS1, SS2) combinées dans un circuit OU (OG) câblé ou dans un circuit OU-exclusif (AG) sont appliquées à l'entrée de comptage du compteur (Z) et sont appliquées sous forme combinée ou individuellement à l'entrée du microprocesseur (9).

3. Dispositif de réglage de contre-lame selon la revendication 1 ou 2, caractérisé par le fait que les impulsions de sortie (I1, I2) des circuits à seuil (SS1, SS2) combinées dans un circuit ET (UG) sont appliquées au premier système temporisé (TR1).

4. Dispositif de réglage de contre-lame selon une des revendications précédentes, caractérisé par le fait que le signal de sortie (VS) du deuxième circuit d'horloge (TR2) redéclenchable est appliqué à une entrée du microprocesseur (9) et est exploité par celui-ci dans le sens d'une indication de défaut.

5. Dispositif de réglage de contre-lame selon une des revendications précédentes, caractérisé par le fait que le signal de compteur peut être prélevé à l'aide d"un sélecteur (WS) sur une des sorties d'étage de comptage (D4, D5, D6).

6. Dispositif de réglage de contre-lame selon la revendication 1, caractérisé par le fait que le microprocesseur (9) commande avec des signaux de direction et des signaux de commande de moteur, par l'intermédiaire d'un multiplexeur (MUX) et de commutateurs électroniques (U1, U2, U3) placés derrière celui-ci, les deux lignes d'alimentation des induits des moteurs de réglage (20, 20A) et les lignes de retour et par le fait que le signal de sortie (VS) du deuxième circuit d'horloge (TR2) commande le multiplexeur (MUX) dans le sens d'une inversion, de telle sorte que le sens de rotation soit inversé et par le fait que le commutateur de sécurité (SR) est un relais par le contact (RK) duquel les commutateurs électroniques (U1, U3) des lignes d'alimentation de moteur qui alimentent les moteurs de réglage (20, 20A) dans le sens d'une réduction du jeu de coupe, sont connectés à la ligne d'alimentation en tension (UL).

7. Dispositif de réglage de contre-lame selon la revendication 6, caractérisé par le fait que le relais commutateur de sécurité (SR) est commandé par le signal de sortie (VS) dans le sens de la retombée coupant le courant et que le contact de relais (RK) et un contact de travail.

8. Dispositif de réglage de contre-lame selon une des revendications précédentes, caractérisé par le fait qu'un détecteur de rotation (DR, DRA) est disposé sur chaque moteur de réglage (20, 20A), lequel détecteur de rotation envoie des impulsions d'angle de rotation au microprocesseur (9) et par le fait que lorsqu'une opération d'affûtage est terminée, que le tambour porte-couteaux (4) tourne et que le jeu de coupe doit être réglé:
- on active les deux moteurs de réglage (20, 20A), dans le sens d'une augmentation du jeu de coupe, pour un nombre prédéterminé de tours tel que la barre contre-lame (2) ait dépassé de manière certaine un point mort du frein à friction,
- qu'ensuite on active les moteurs de réglage (20, 20A) de manière synchrone ou quasi-synchrone dans le sens d'une réduction du jeu de coupe soit jusqu'à ce que l'on atteigne un nombre de tours prédéterminé de sécurité, soit jusqu'à ce que les impulsions de soitie (I1, I2) apparaissent les unes à la suite des autres, sous forme de groupe d'impulsions sans interruption prolongée entre elles,
- qu'ensuite on active les moteurs de réglage (20, 20A) de nouveau dans le sens d'une augmentation du jeu de coupe, en comptant le nombre de tours, jusqu'à ce qu'un temps supérieur à la durée d'un tour du tambour porte-couteaux soit écoulé depuis la fin d'un groupe d'impulsions, à la suite de quoi on mémorise temporairement le nombre de tours à vide qui a été compté,
- et on active les moteurs de réglage (20, 20A) dans le sens d'une augmentation du jeu, pour un nombre de rotations qui correspond à un jeu à régler, prédéterminé côté utilisateur, de manière à obtenir la position finale souhaitée de la contre-lame
- et qu'ensuite on active les moteurs de réglage (20, 20A) de nouveau dans le sens d'une réduction du jeu et on compte les tours jusqu'à l'obtention de la moitié du nombre de tours à vide mémorisé, le processus de réglage étant alors terminé, ou jusqll'à l'apparition d'un nouveau groupe d'impulsions, à la suite de quoi les deux dernières étapes du procédé sont répétées.

9. Dispositif de réglage de contre-lame selon la revendication 8, caractérisé par le fait que lorsque le comptage du nombre de tours en phase d'augmentation du jeu, jusqu'à la fin de celle-ci, après la disparition des groupes d'impulsions, donne un nombre de tours qui est inférieur et/ou supérieur à une valeur seuil inférieure ou supérieure prédéterminée, un message d'erreur correspondant, indiquant que le frein à friction est exagérément graissé ou grippé, est délivré.

10. Dispositif de réglage de contre-lame selon la revendication 9, caractérisé par le fait que les moteurs de réglage (20, 20A) sont commandés par modulation de la durée d'impulsion et, lorsqu'une indication de défaut du frein à friction apparaît, les moteurs sont commandés avec un rapport impulsion-pause modifié en continu, la disparition ou la réapparition des signaux des détecteurs de rotation (DR, DRA) étant surveillée et la commande étant arrêtée et le rapport impulsion-pause correspondant étant transmis à un dispositif d'édition (A) et/ou mémorisé en vue d'une interrogation.

11. Dispositif de réglage de contre-lame selon une des revendications 9 ou 10, caractérisé par le fait que les deux moteurs de réglage (20, 20A). en fonctionnement normal, sont alimentés alternativement avec un rapport cyclique d'environ 0,5.

12. Dispositif de réglage de contre-lame selon une des revendications précédentes, caractérisé par le fait que le microprocesseur (9) avec les impulsions (I1, I2, I) procède en interne par une commande par programme, à un comptage et le cas échéant à un effacement du compteur, de manière analogue au comptage et à l'effacement matériel du compteur (Z) et, lorsque la position de compteur prédéterminée en tant que valeur seuil est atteinte, commande les moteurs de réglage (20, 20A) dans le sens de l'arrêt ou de l'augmentation du jeu et vérifie si le signal (VS) indique la réaction du deuxième circuit d'horloge (TR2) et si ce n'est pas le cas délivre un message de défaut.

13. Dispositif de réglage de contre-lame selon la revendication 8, caractérisé par le fait que le jeu à régler est indiqué au microprocesseur (9) par un réglage à potentiomètre.

14. Dispositif de réglage de contre-lame selon la revendication 8, caractérisé par le fait que la position finale à régler de la contre-lame, après un préréglage du compteur de tours sur un nombre de tours qui correspond à une avance des meules d'affûtage, est obtenue par comptage continu en fonction du sens de rotation du nombre de tours des moteurs de réglage (20, 20A) pendant tout le processus de réglage jusqu'à la position finale de compteur zéro, à la suite de quoi intervient une rotation des moteurs (20, 20A) de la moitié du nombre de tours à vide mémorisée, à des fins de relâchement du serrage.
